# EUROPEAN PATENT APPLICATION

(11) **EP 1 433 984 A2**
(43) Date of publication of application: **30.06.2004**
(21) Application number: 03253853.0
(22) Date of filing: 18.06.2003
(51) Int. Cl.: F16H 61/22, F16H 59/02

(54) **Gate type shift lever apparatus with shift lock mechanism**

(30) Priority: 19.12.2002 JP 2002367484; 19.12.2002 JP 2002367485; 24.12.2002 JP 2002371349
(71) Applicant: Mannoh Kogyo Co., Ltd., Anjo-shi, Aichi (JP)
(72) Inventor: Tazai Akira, 4-14-24 Imahonmachi2Anjo-shi Aichi (JP)
(74) Representative: Paget, Hugh Charles Edward

(57) **Abstract**

The invention provides a gate type shift lever apparatus in which a solenoid type shift lock mechanism is built at a position engaging with a shift lever (3) of a position P. This shift lock mechanism is constituted by a solenoid (12) which is turned on at a time when a brake pedal is stepped on, a slider (11) which is closely contacted with the solenoid (12) by a spring (14) at a normal time, and a shift lock plate (13) which is pivoted onto the slider (11). The shift lock plate (13) is oscillated along with a selecting operation of a shift lever (3). When a select operation of the shift lever (3) is carried out in the case that the brake pedal is stepped on and the solenoid (12) is in an on state, the slider (11) is adsorbed by the slider (12) so as to stay at a fixed position, so that only the shift lock plate (13) oscillates so as to move the shift lever (3) from the position (P). However, when the select operation of the shift lever (3) is carried out in the case that the solenoid (12) is in an off state, the slider (11) slides in a direction moving apart from the solenoid (12), so as to prevent the shift lock plate (13) from being oscillated. Accordingly, the shift lever (3) is not out of the shift lock plate (13) and can not be moved from the position (P).

## Description

### TECHNICAL FIELD

The present invention relates to a gate type shift lever apparatus for a motor vehicle which a solenoid type shift lock mechanism is built in.

### BACKGROUND ART

In a shift lever apparatus for an automatic transmission vehicle (AT vehicle) , there is build in a shift lock mechanism for preventing a shift lever from being moved a position P to the other positions until a key is turned to a position ACC and a brake pedal is stepped on. The solenoid type shift lock mechanism is structured such that a shift lock operation is carried out by using a solenoid which is turned on and off interlocking with a motion of the brake pedal. Accordingly, there is an advantage that it is not necessary that the motion of the brake pedal is transmitted to the shift lever apparatus by a cable.

However, since the conventional solenoid type shift lock mechanism is structured such that a shift lock canceling operation is carried out by adsorbing a yoke by the solenoid at a time when the brake pedal is stepped on, a large-sized solenoid is required for obtaining a predetermined adsorptive power, and there is a problem that an increase in weight of the vehicle and an increase in cost are generated. Further, there is a problem that an offensive operation noise is generated at a time when the solenoid is operated.

An object of the present invention is to solve the conventional problem mentioned above, and to provide a gate type shift lever apparatus in which a secure shift lock operation can be carried out by a small-sized and compact solenoid, and a solenoid type shift lock mechanism generating no operation noise is build.

### DISCLOSURE OF THE INVENTION

In accordance with the present invention, there is provided a gate type shift lever apparatus in which a solenoid type shift lock mechanism is built at a position engaging with a shift lever set at a position P, wherein the shift lock mechanism comprises a solenoid which is turned on at a time when a brake pedal is stepped on so as to hold a slider at a fixed position, a slider which is closely contacted with the solenoid by a spring at a normal time, and a shift lock plate which is pivoted onto the slider and is oscillated along with a selecting operation of the shift lever, and when a select operation of the shift lever is carried out in the case that the solenoid is in an off state, the slider slides in a direction moving apart from the solenoid, so as to prevent the shift lock plate from being oscillated.

The shift lock mechanism built in the gate type shift lever apparatus in accordance with the present invention makes the slider to be closely contacted with the solenoid by the spring at the normal time, and turns on the solenoid so as to strongly hold the slider at a fixed position at a time when the brake pedal is stepped on. Accordingly, the shift lock plate oscillates without sliding at a time of carrying out the select operation of the shift lever, thereby making it possible to move the shift lever from the position P. However, since the slider is only held by the spring force until the brake pedal is stepped on, the shift lock plate slides in a direction moving apart from the solenoid together with the slider against the spring force at a time of carrying out the select operation of the shift lever, so that it is impossible to move the shift lever from the position P. As mentioned above, in accordance with the present invention, since the slider is closely contacted with the solenoid by the spring at the normal time, it is possible to carry out a secure shift lock operation by a small-sized and compact solenoid, and further the operation noise is not generated.

In this case, a position detecting switch mentioned below can be built in the gate type shift lever apparatus in accordance with the present invention. Further, in the case that the gate type shift lever apparatus in accordance with the present invention is set to a sequential type shift lever apparatus, a sequential switch mentioned below can be built in the shift lever apparatus.

### BRIEF DESCRIPTION OF THE DRAWINGS

Fig. 1 is a general view of a shift lever apparatus in accordance with the present invention;

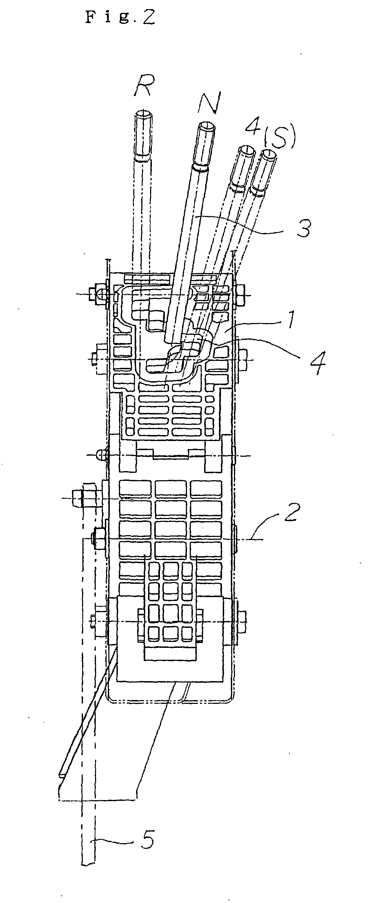

Fig. 2 is a right side elevational view of Fig. 1;
Fig. 3 is a view of a gate groove for a five-speed automatic transmission (A/T);
Fig. 4 is a schematic view of a state in which a shift lever is shifted to each of positions;
Fig. 5 is a view of an inner structure showing a state in which the shift lever is mounted;
Fig. 6 is a view of an inner cross section showing a state in which the shift lever is mounted;
Fig. 7 is an outline view of a shift lock apparatus;
Fig. 8 is a perspective view of the shift lock apparatus;
Fig. 9 is an enlarged plan view showing a state in which the shift lever is at a position P;
Fig. 10 is an enlarged plan view showing a state in which the shift lever is going to be moved in a select direction from the position P without stepping on a brake pedal;
Fig. 11 is an enlarged plan view showing a state in which the shift lever is going to be moved in the select direction from the position P with stepping on the brake pedal;
Fig. 12 is an enlarged plan view of a main portion showing another embodiment;
Fig. 13 is a view describing an operation of a position detecting switch in positions P and R;
Fig. 14 is a view describing an operation of the position detecting switch in a position D;
Fig. 15 is a view describing an operation of the position detecting switch in a position 4;
Fig. 16 is a view describing an operation of the position detecting switch in a position 2;
Fig. 17 is a view describing an operation of the position detecting switch in a position L;
Fig. 18 is a plan view showing a sequential type gate groove;
Fig. 19 is a partly cross sectional view of a sequential switch showing a state in which the shift lever is at the position D;
Fig. 20 is a partly cross sectional view of the sequential switch showing a state in which the shift lever is at a sequential position;
Fig. 21 is a cross sectional view of the sequential switch showing a state in which the shift lever is at a neutral position of the sequential position; and
Fig. 22 is a cross sectional view of the sequential switch showing a state in which the shift lever is operated from the neutral position of the sequential position.

### BEST MODE FOR CARRYING OUT THE INVENTION

### (Entire structure)

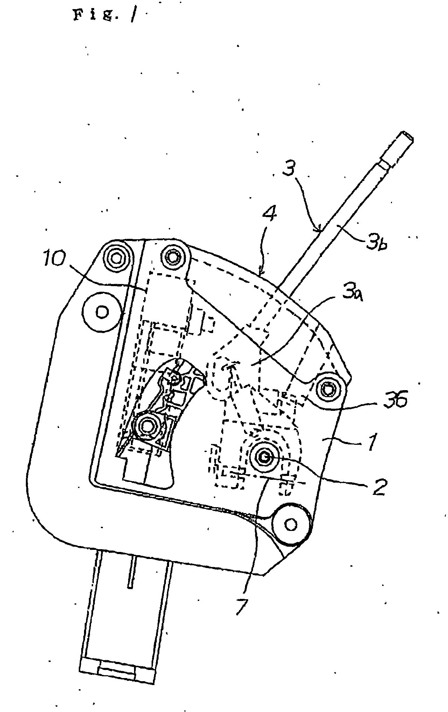

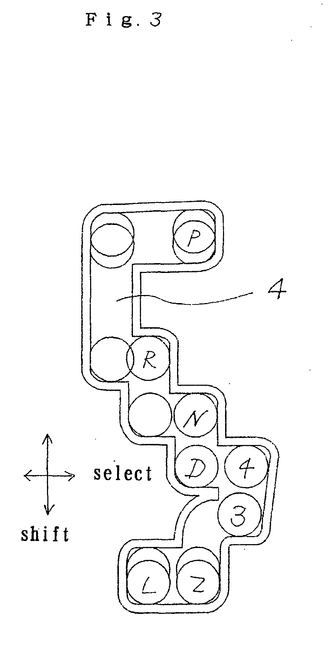

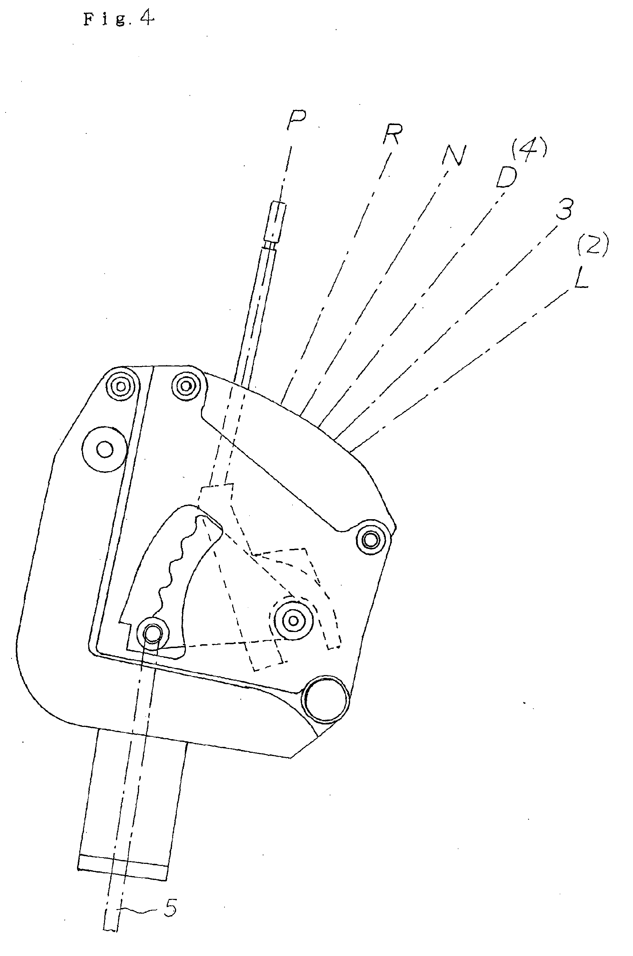

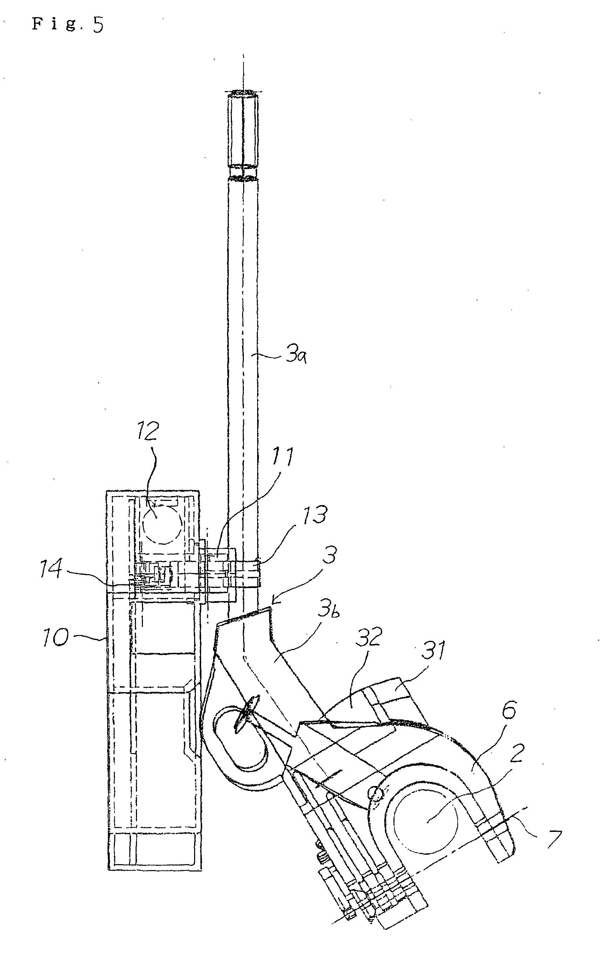

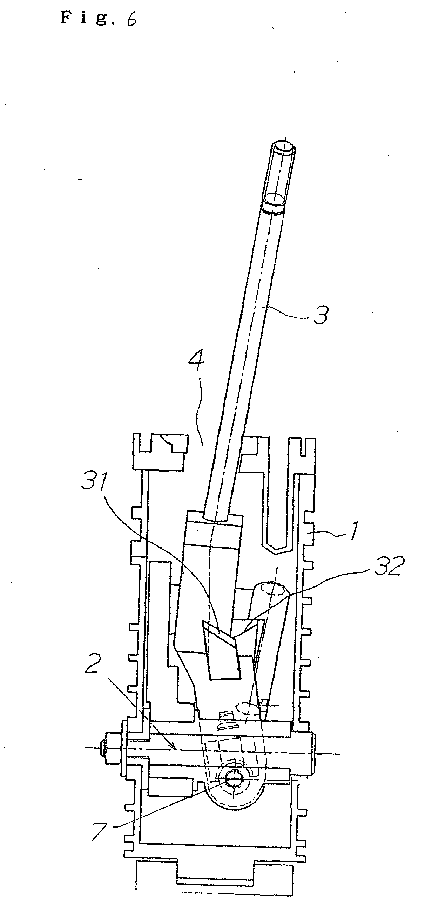

Fig. 1 is a general view of a gate type shift lever apparatus in accordance with the present invention, in which reference numeral 1 denotes a case, reference numeral 2 denotes a shift center axis fixed to an inner portion of the case 1, and reference numeral 3 denotes a shift lever shifted around the shift center axis 2. The shift lever 3 is constituted by a base portion 3a and a shank portion 3b. A gate groove 4 as shown in Fig. 3 is formed on an upper face of the case 1. The gate groove 4 in accordance with this embodiment is structured for a five speed automatic transmission (A/T), and each of positions P, R, N, D, 4, 3, 2 and L is arranged as illustrated. An angle in the case that the shift lever 3 is shifted to each of the positions is shown in Fig. 4. The position of the shift lever 3 is transmitted to the transmission by a shift cable 5 shown in Fig. 4 in the same manner as the conventional one. Figs. 5 and 6 are views showing a state in which the shift lever 3 is mounted, in which a lower end portion 6 of the shift lever 3 is formed in an U-shape, and a select center axis 7 is arranged slightly below the shift center axis 2. Accordingly, the shift lever 3 can carry out a shift operation around the shift center axis 2 and a select operation around the select center axis 7.

### (Shift lock mechanism)

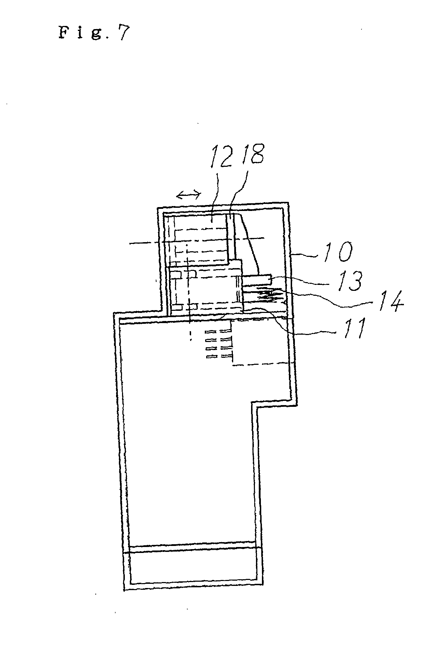

As shown in Figs. 1 and 5, a shift lock mechanism is provided at a position at which the shift lock mechanism is engaged with a shank portion 3b of the shift lever 3 at a time of shifting the shift lever 3 to the position P. Reference numeral 10 denotes a case of the shift lock mechanism. In an inner portion of the case 10, a slider 11, a solenoid 12, a shift lock plate 13, a torsion spring 14 and the like are provided, as shown in Figs. 7 to 9.

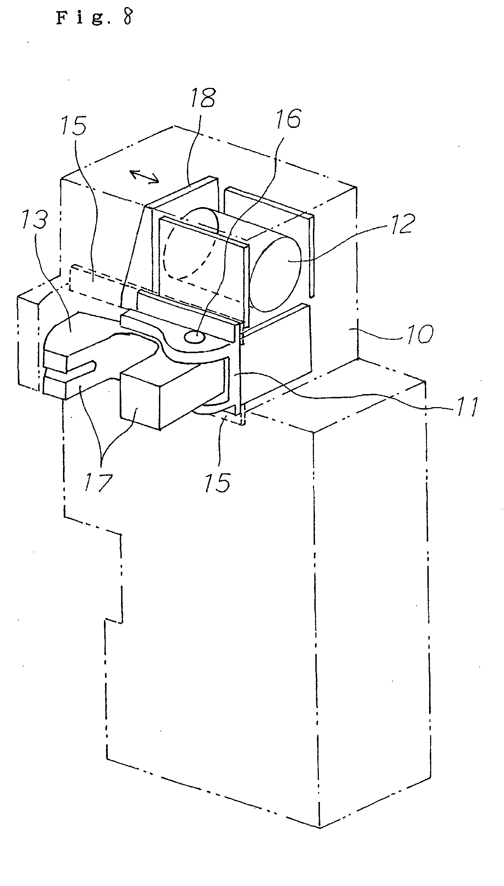

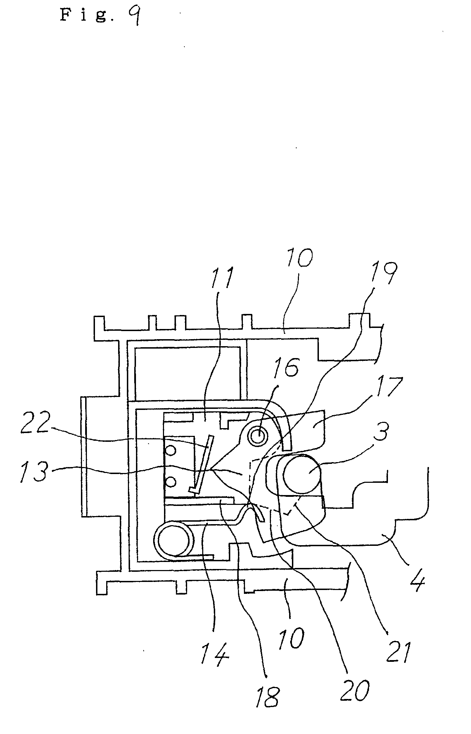

As shown in Fig. 8, the slider 11 is placed so as to slide in the select direction of the shift lever 3 along a rail 15 in an inner portion of the case 10. The slide direction is shown by an arrow in Fig. 8. This slide direction corresponds to a vertical direction to the paper face in Fig. 5, a right and left direction in Fig. 7, and an up and down direction in Fig. 9 and following Figs. In this case, a slide distance is very small. A shift lock plate 13 is pivoted to one side of the slider 11 by an axis 16. The shift lock plate 13 has a fork portion 17 in a leading end thereof as shown in Fig. 8 and following Figs, and is structured such that a lower portion of the shift lever 3 is fitted to the fork portion 17 at a time of shifting the shift lever 3 to the position P. A yoke 18 is fixed to a upper portion of the slider 11.

As shown in Figs. 5, 7 and 8, a solenoid 12 is fixed to a position corresponding to the yoke 18 in the upper portion of the slider 11. As described later, the yoke 18 is moved apart from the solenoid 12 only in the special case, and the yoke 18 is kept closely contact with the solenoid 12 by the spring 14 at a normal time. Accordingly, it is not necessary that the solenoid 12 sucks the yoke 18 existing at the apart position, the solenoid 12 can be made small in size and compact, and no operation noise is generated. In this case, the solenoid 12 is omitted in the drawings in Fig. 9 and following Figs.

A torsion spring 14 is provided in an inner portion of the case 10 as shown in Fig. 9 and following Figs. A base portion of the torsion spring 14 is in contact with an inner face of the case 10, and a leading end 19 thereof is bent in an L-shape. As shown in Fig. 9, a slit is formed between upper and lower flat plates in one end portion of the shift lock plate 13, and an inner face of the slit forms an angle cam. Further, the leading end 19 of the torsion spring 14 is always in contact with any surfaces 20 and 21 of the angle cam, presses the shift lock plate 13 and the slider 11 toward the solenoid 12, and closely contacts the yoke 18 with the solenoid 12.

Reference numeral 22 denotes a P-position detecting switch 22 for detecting whether or not the shift lever 3 is at the position P. The P-position detecting switch 22 is generally placed in an outer portion of the case 10 in the conventional product, however, in accordance with the present invention, since the solenoid 12 can be made small in size, the P-position detecting switch 22 can be received in the inner portion of the case 10, so that there can be obtained an effect that a waterproof structure is not required.

A description will be given below of an operation of the shift lock mechanism with reference to Figs. 9, 10 and 11. First, Fig. 9 shows a state in which the shift lever 3 is at the position P. In this state, the leading end 19 of the torsion spring 14 is in contact with a face 20 of the angle cam in the shift lock plate 13, and elastically presses the shift lock plate 13 in a counterclockwise direction so as to stabilize the position of the shift lock plate 13. Further, since a whole of the slider 11 to which the shift lock plate 13 is mounted is pressed to an upper side in the drawing (that is, toward the solenoid 12) by a force of the torsion spring 14, the yoke 18 of the slider 11 is kept being pressed against the solenoid 12. Accordingly, even when the solenoid 12 is turned on or off in correspondence to the operation of the brake pedal, the operation noise at a time when the solenoid 12 adsorbs the yoke 17 is not generated.

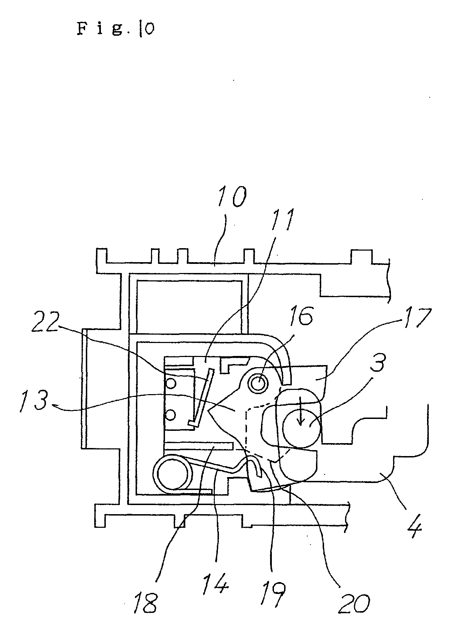

Fig. 10 shows a state in which the shift lever 3 is going to be moved in the select direction from the position P without stepping on the brake pedal. At this time, a force directed to a lower side in the drawing is applied to the shift lock plate 13 from the shift lever 3. This force generates a force rotating the shift lock plate 13 in a clockwise direction and a force moving the shift lock plate 13 in a downward direction together with the slider 11. As mentioned above, in this state, the force in the counterclockwise direction is applied to the shift lock plate 13 from the torsion spring 14. Accordingly, in a state in which the brake pedal is not stepped on, the force rotating the shift lock plate 13 in the clockwise direction is cancelled by the force in the counterclockwise direction applied from the torsion spring 14, and the force moving the shift lock plate 13 in the downward direction together with the slider 11 overcomes. As a result, since the shift lock plate 13 slides downward with hardly rotating as shown in Fig. 10, the shift lever 3 can not move out from the fork portion 17 of the shift lock plate 13, and it is impossible to move the shift lever 3 in the select direction from the position P. In the manner mentioned above, the shift lock is achieved in the state in which the brake pedal is not stepped on.

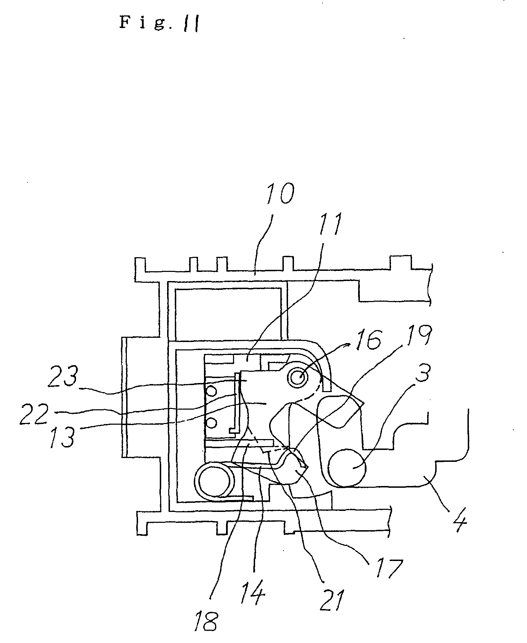

However, if the brake pedal is stepped on in a state in which the key is turned to the position ACC, the solenoid 12 is turned on, and the yoke 18 of the slider 11 is strongly adsorbed to the solenoid 12. Therefore, when the shift lever 3 is intended to be moved from the position P in the select direction as shown in Fig. 11, the force moving the shift lock plate 13 downward together with the slider 11 is cancelled by the adsorptive force and it is impossible to slide the shift lock plate 13. Then, the shift lock plate 13 overcomes the force in the counterclockwise direction applied from the torsion spring 14 so as to rotate in the clockwise direction as shown in Fig. 11, thereby making it possible to move the shift lever 3 from the position P in the select direction. That is, the shift lever 3 can be moved from the position P to the other positions by stepping on the brake pedal in a state in which the key is turned to the position ACC. Further, the leading end 18 of the torsion spring 14 is in contact with another face 21 of the angle cam in the shift lock plate 13 accompanying therewith, and keeps the shift lock plate 13 at a position shown in Fig. 11. Therefore, it is possible to carry out an operation for returning the shift lever 3 to the position P with no trouble.

In this case, the P-position detecting switch 22 received in the inner portion of the case 10 is kept off in the states in Figs. 9 and 10, however, is pressed by a projection 23 on a back face of the shift lock plate 13 in the state in Fig. 11, so as to be turned on. Accordingly, the shift lever 3 goes out from the position P and an electric signal is taken out.

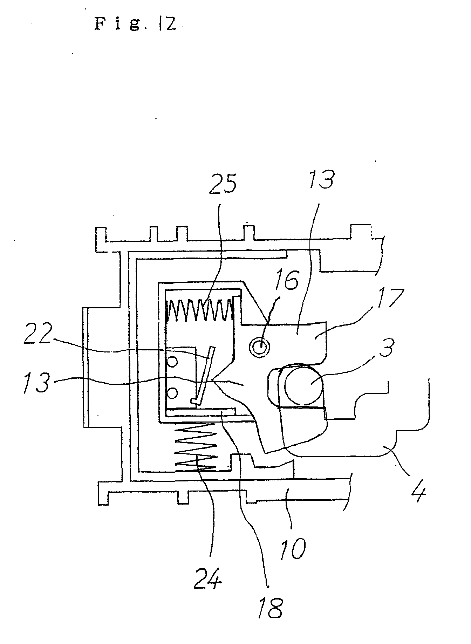

In the embodiment mentioned above, the position of the shift lock plate 13 at a time when the shift lever 3 is at the position P is stabilized at the same time when the slider 11 is elastically pressed toward the solenoid 12 by engaging the leading end of the torsion spring 14 with the angle cam provided in the shift lock plate 13. That is, the single torsion spring 14 is provided with two roles. However, as in another embodiment shown in Fig. 12, the roles may be shared by two springs 24 and 25.

In another embodiment shown in Fig. 12, a first spring 24 is provided between the slider 11 and the case 10, and elastically presses the slider 11 toward the solenoid 12. Further, a second spring 25 is provided between the slider 11 and the shift lock plate 13, and elastically presses the shift lock plate 13 in a clockwise direction on the drawing. In accordance with this structure, the shift lock plate 13 is positioned at a position at which the inner face of the fork portion 17 is brought into contact with the shift lever 3. In the structure of the embodiment shown in Fig. 12, since the slider 11 also slides to the lower side in the drawing against the first spring 24 in a state in which the solenoid 12 is off, it is impossible to select the shift lever 3 from the position P, however, since the slider 11 does not slide in a state in which the solenoid 12 is on, it is possible to select the shift lever 3 from the position P while rotating the shift lock plate 13, in the same manner as the embodiment mentioned above.

As described above, since the shift lock mechanism built in the gate type shift lever apparatus in accordance with the present invention is in the state in which the yoke is always closely contacted with the solenoid, it is possible to carry out the secure shift lock operation by the compact and light solenoid. Further, the operation noise of the solenoid is not generated. Further, owing to the compact structure of the solenoid, it is possible to receive the P-position detecting switch in the inner portion of the case, and it is not necessary to make the structure waterproof. Accordingly, it is possible to realize a significant cost saving.

### (Position detecting switch)

Next, a description will be given of a position detecting switch which can be built in the gate type shift lever apparatus in accordance with the present invention together with the shift lock mechanism. The position detecting switch is built in the gate type shift lever apparatus in the case that the gate grove 4 is formed in a shape shown in Fig. 3.

In the case that the gate groove 4 is used for the five-speed A/T in which the respective positions comprising P, R, N, D, 4, 3, 2 and L are arranged in the manner shown in Fig. 3, since the positions D and 4 and the positions 2 and L are respectively at the same position in the shift direction and the switching is carried out by the select operation, it is electrically detected by a switch in which position the shift lever is, the positions D and 4 or the positions 2 and L. Accordingly, first and second switches are conventionally arranged in two positions, 4 and L, and it is detected in which position the shift lever is, the positions D and 4 or the positions 2 and L. However, two switches are required for this structure, so that it is troublesome to arrange wires as well as cost is increased. A position detecting switch shown below can detect in which position the shift lever is, the positions D and 4 or the positions 2 and L, although a single switch is employed.

As shown in Figs. 5 and 6, two convex cams 31 and 32 inclined in the select direction are provided on an outer face of the upper portion in the base portion 3b of the shift lever 3. In this embodiment, the convex cams 31 and 32 are two cams in which distances from the shift center axis 2 are approximately equal to each other as shown in Fig. 5, and directions of incline are different from each other as shown in Fig. 6. In this embodiment, two separated convex cams 31 and 32 are formed, however, these cams may be, of course, integrally formed.

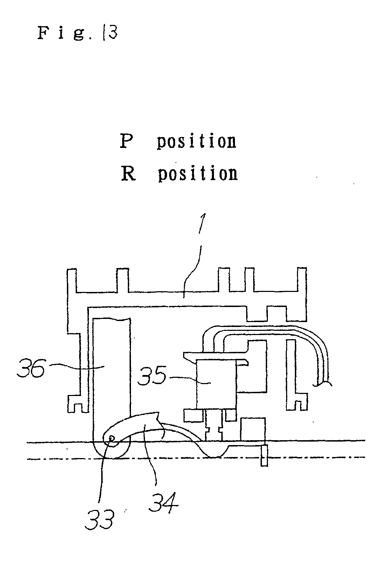

As shown by a broken line in Fig. 1, a column 36 is trailed toward the base portion 3a of the shift lever 3 from an inner ceiling surface of the case 1. Further, a link 34 is pivoted to a lower end portion of the column 36 by an axis 33 as shown in Fig. 13. The link 34 extends in the select direction, and can oscillate up and down around the axis 33 positioned at an end portion in the select direction. Accordingly, as described later, when the select operation is carried out in a state in which the convex cams 31 and 32 are in contact with the link 34, the link 34 is oscillated in an up and down direction. Further, a single switch 35 detecting the motion of the link 34 is arranged at an upper position of the link 34 in the inner portion of the case 1. This switch 35 is an on-and-off switch which is pushed so as to be turned on at a time when the link 34 oscillates to the upper side.

First, when the shift lever 3 is at the position P or the position R, the shift lever 3 is in a state close to an upright posture as shown in Fig. 4, and at this time, the convex cams 31 and 32 of the shift lever 3 are not in contact with the link 34 as shown in Fig. 13. Accordingly, the select operations at these positions have no relation to the switch 35.

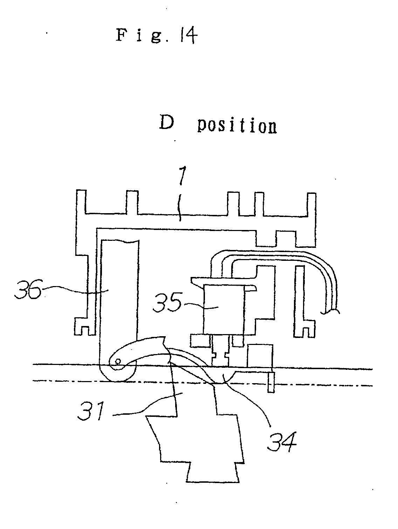

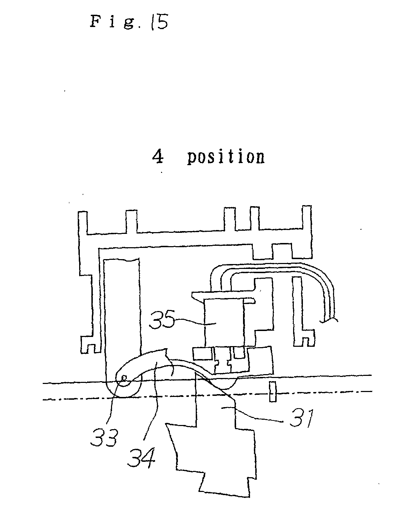

When the shift lever 3 is shifted to the position D, the shift lever 3 rotates in a right direction in Figs. 1 and 4 around the shift center axis 2, and the convex cam 31 of the shift lever 3 falls into the lower portion of the link 34 as shown in Fig. 14. However, since the link 34 is in non-contact with the convex cam 31, the link 34 is at a descending position in this state, and the switch 35 is in the off state. However, when the shift lever 3 is selected to the position 4 from the position D, the link 34 is oscillated slightly to the upper side by an inclined surface of the convex cam 31 of the shift lever 3 as shown in Fig. 15, thereby turning on the switch 35 pressed by the link. Therefore, it is possible to detect that the shift lever 3 falls into the position 4 by means of an electric signal.

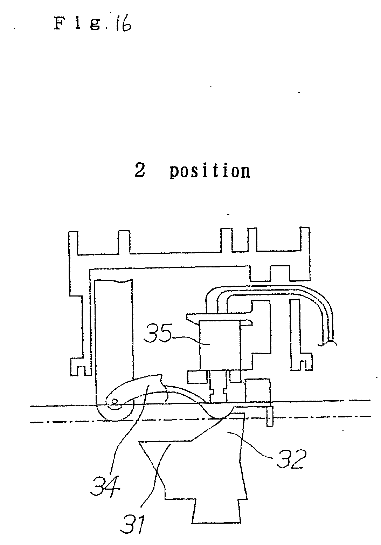

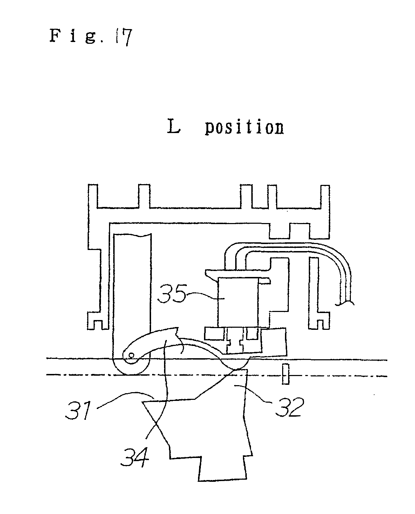

Further, when the shift lever 3 is shifted to the position 2, the shift lever 3 rotates further in the right direction around the shift center axis 2. Accordingly, the convex cam 32 of the shift lever 3 falls into the lower portion of the link 34 as shown in Fig. 16. In this state, the link 34 is at the descending position, and the switch 35 is in the off state. However, when the shift lever 3 is selected to the position L from the position 2, the link 34 is lifted up by an inclined surface of the convex cam 32 of the shift lever 3 as shown in Fig. 17 so as to be oscillated to the upper side, thereby turning on the switch 35 pressed by the link. Therefore, it is possible to detect that the shift lever 3 falls into the position L by means of an electric signal.

As mentioned above, it is possible to detect the select operation in two shift positions by the single switch 35. In this case, the switch 35 is turned on at any positions of the position 4 and the position L, however, since it is possible to confirm a difference in the shift position on the basis of the signal output from the side of the transmission, no confusion is generated.

### (Sequential switch)

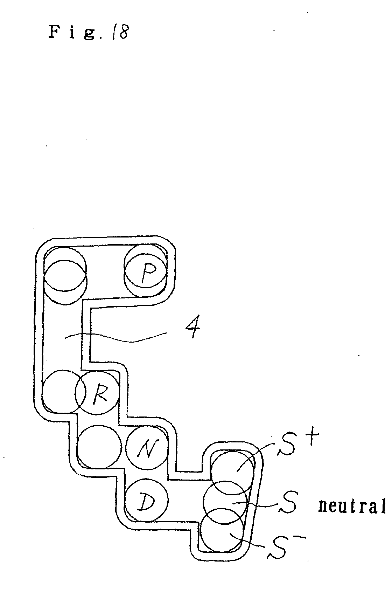

Next, a description will be given of a sequential switch which can be built in the gate type shift lever apparatus in accordance with the present invention together with the shift lock mechanism. This sequential switch is built in the shift lever in the case that the gate groove 4 is a sequential gate shown in Fig. 18.

The shift lever apparatus provided with the sequential gate moves the shift lever from the drive position D further to the sequential position S, and moves in a plus direction or a minus direction, thereby giving a shift up signal or a shift down signal to the transmission. For this purpose, a switch (a sequential switch) for detecting the movement of the shift lever in the sequential position S is required. It is preferable that the sequential switch is directly turned on or off by the shift lever itself or the lever fixed to the shift lever, however, in the case that the switches are arranged in both sides holding the shift lever therebetween, there are problems that an entire size is increased, and a large-sized switch capable of absorbing the stroke of the shift lever is required, and cost is increased. The sequential switch shown below can make the entire size small, and can intend to reduce the cost by using the inexpensive switch having a small stroke.

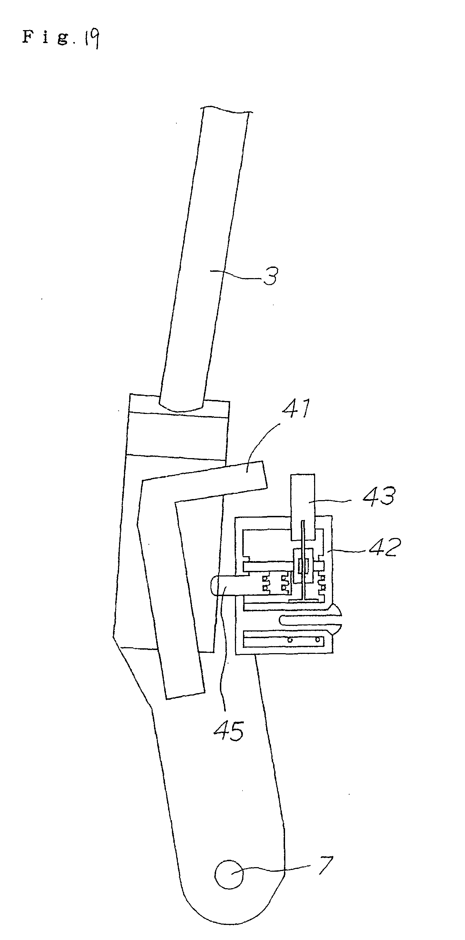

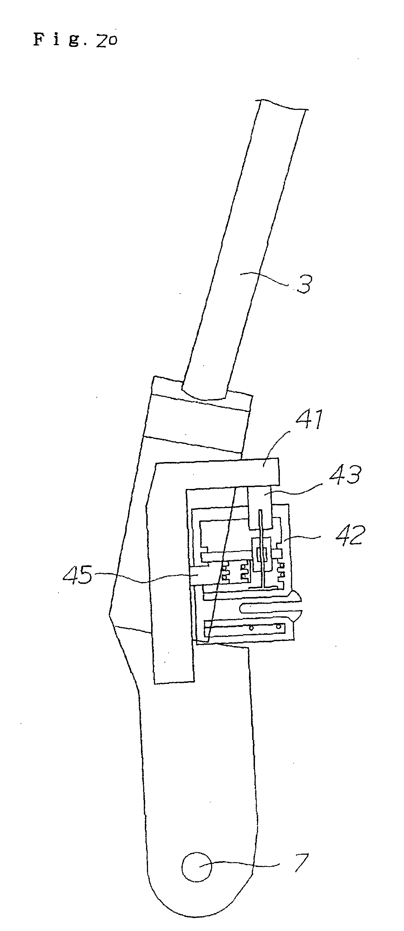

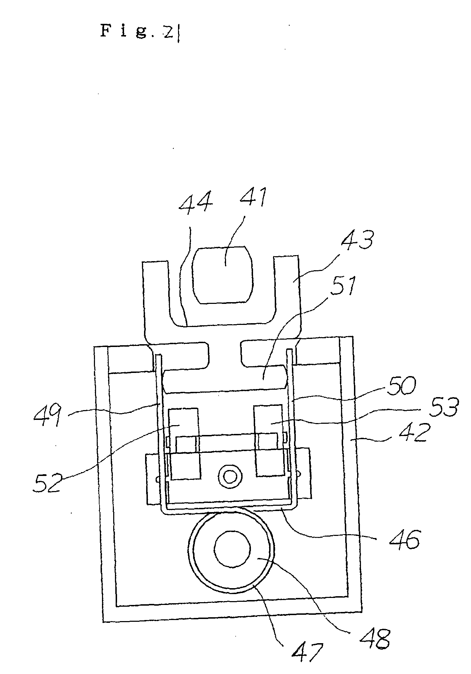

In the case that the sequential switch is used, an L-shaped lever 41 is fixed to a side surface of the shift lever 3 as shown in Fig. 19. Further, a switch case 42 of the sequential switch is fixed to a side position of the shift lever 3 in the inner portion of the case 1. As shown in Fig. 21, a slider 43 is slidably provided on one face of the switch case 42, and a leading end of the slider is formed as a U-shaped groove 44 capable of receiving a leading end of the lever 41. Since a portion of the U-shaped groove 44 protrudes from a surface of the switch case 42, the leading end of the lever 41 is fitted into the U-shaped groove 44 as shown in Fig. 21 by select operating the shift lever 3 from the position D to the sequential position shown in Fig. 20. Since a slide direction of the slider 43 is coincided with a moving direction of the shift lever 3 in the sequential position, the slider 43 can slide following to the movement of the shift lever 3. In this case, it is detected electrically that the shift lever 3 is selected from the position D to the sequential position by utilizing the fact that the lever 45 protruded from the side face of the switch case 42 is pressed by the lever 41.

As shown in Fig. 21, a spring 46 formed approximately in a U-shape and having an inward elasticity is provided in the inner portion of the switch case 42 of the sequential switch. This spring 46 is a kind of helical spring having a loop 47 in a base portion, and a portion of the loop 47 is pivoted to a circular axis 48 of the switch case 42. Further, upper end portions of both left and right arms 49 and 50 of the spring 46 are elastically engaged with both sides of a leg portion 51 of the slider 43. Further, two switches 52 and 53 are arranged at inner positions of the spring 46 in the inner portion of the switch case 42. These switches 52 and 53 are switches each having a contact point in an outer side thereof and having a small stroke, and are turned on or off by both left and right arms 49 and 50 of the spring 46.

A description will be given below of an operation of the sequential switch.

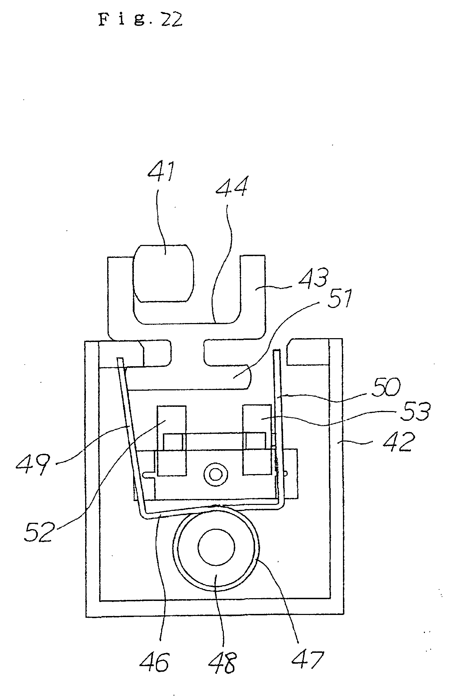

Fig. 21 shows a state in which the shift lever 3 is selected from the position D to a neutral position of the sequential position, and the slider 43 is at a center position in this state. The upper end portions of both left and right arms 49 and 50 of the spring 46 are elastically engaged with both sides of the leg portion 51 of the slider 43, however, the contact points of the switches 52 and 53 are slightly apart from both left and right arms 49 and 50 of the spring 46, and are both in the off state. However, as shown in Fig. 22, when the shift lever 3 is operated to one side (a left side in Fig. 22) in the sequential position, the slider 43 is pressed by the leading end of the lever 41 so as to be slid to one side, and the left arm 49 of the spring 46 is pressed to the left side by the leg portion 51 of the slider 43. As a result, a whole of the spring 46 rotates in a counterclockwise direction around the loop 47, and the opposite (right) arm 50 is in contact with the contact point of the right switch 53 so as to turn on the switch 53. Since the contact between the switch 53 and the arm 49 is elastically achieved by an elastic force of the whole of the spring 46, no trouble is generated even in the case that the switch 53 has a compact size and a small stroke. At this time, the opposite switch 52 is, of course, in the off state, and can take out the movement of the shift lever 3 as an electric signal. Further, in the case that the shift lever 3 is operated to the opposite side (right side) , the left switch 52 is turned on in the same manner.

When using the sequential switch, it is possible to take out the operation of the shift lever 3 in the sequential position as the electric signal, and it is possible to give the shift up signal or the shift down signal to the transmission. Further, since the stroke of the slider 43 slid by the shift lever 3 is elastically compressed by the spring 46, the switches 52 and 53 are not damaged even in the case that the switch having a small in size and having a small stroke is used.

### INDUSTRIAL APPLICABILITY

As described above, since the gate type shift lever apparatus in accordance with the present invention has the solenoid type shift lock mechanism which can carry out a secure shift lock operation by the small-sized and compact solenoid, and generates no operation noise, the gate type shift lever apparatus is excellent as the shift lever apparatus for the AT vehicle. Further, since the position detecting switch mentioned above is built in, it can be detected by the single switch in which position the shift lever is, the positions D and 3 or the positions 2 and L, and it is possible to intend to reduce the cost. Further, in the case that the gate type shift lever apparatus in accordance with the present invention is constituted by the sequential type, it is possible to intend to reduce the cost by building the sequential switch therein.

## Claims

1. A gate type shift lever apparatus in which a solenoid type shift lock mechanism is built at a position engaging with a shift lever set at a position P, wherein said shift lock mechanism comprises a solenoid which is turned on at a time when a brake pedal is stepped on so as to hold a slider at a fixed position, a slider which is closely contacted with the solenoid by a spring at a normal time, and a shift lock plate which is pivoted onto the slider and is oscillated in correspondence to a selecting operation of the shift lever, and when a select operation of the shift lever is carried out in the case that the solenoid is in an off state, the slider slides in a direction moving apart from the solenoid, so as to prevent the shift lock plate from being oscillated.

2. A gate type shift lever apparatus as claimed in claim 1, further comprising a position detecting switch built in the gate type shift lever apparatus, wherein said position detecting switch is provided with a convex cam inclined in a select direction in a base portion of the shift lever, and is provided with a link which is in contact with said convex cam at a time when the shift lever is at any position of D-4 position and 2-L position and is oscillated by a select operation of the shift lever, and a switch detecting a movement of the link, in a side of the case.

3. A gate type shift lever apparatus as claimed in claim 1, further comprising a sequential switch built in the gate type shift lever apparatus, wherein said sequential switch is provided with a slider which slides following to a movement of the shift lever in a sequential position on one face of the switch case, and is structured such that an approximately U-shaped spring in which a base portion is pivoted to the switch case, and right and left upper end portions are engaged with both sides of said slider, in an inner portion of the switch case, and two switches for detecting the movement of the slider are arranged in an inner position of the spring.
